# EUROPÄISCHE PATENTSCHRIFT

(11) **EP 1 278 003 B1**
(45) Veröffentlichungstag und Bekanntmachung des Hinweises auf die Patenterteilung: **22.09.2004**
(21) Anmeldenummer: 02090239.1
(22) Anmeldetag: 10.07.2002
(51) Int. Cl.: E03F 7/02, F16L 55/10, F16L 55/12

(54) **Sicherungseinrichtung für Absperrelemente**
Device for securing a plugging member
Dispositif pour fixer un élément d'obturation

(30) Priorität: 12.07.2001 DE 20111935 U
(43) Veröffentlichungstag der Anmeldung: 22.01.2003
(73) Patentinhaber: Berliner Wasserbetriebe Anstalt des öffentlichen Rechts, 10179 Berlin (DE)
(72) Erfinder: Pritzel, Manfred, Dipl. Ing., 12107 Berlin (DE)

(56) Entgegenhaltungen:
- EP-A- 0 795 653
- DE-C- 4 423 101
- DE-U- 29 604 927

## Beschreibung

Die Erfindung betrifft eine Einrichtung zur Sicherung und Rückhaltung von Absperrelementen bei der Dichtheitsprüfung von erd- und freiverlegten Rohrleitungen.

Es ist nach der DE 297 20 570 U1 bekannt zur Abdichtung von Entwässerungskanälen für Reparatur- und Reinigungsarbeiten Rohrdichtkissen, auch Absperrblasen genannt, einzusetzen.
Nachteilig hierbei ist, dass beim Einsatz mit Druckluft beaufschlagter Absperrblasen die Luft nach gewisser Zeit zwangsläufig entweicht und somit ein dauerhafter Verschluss nicht hergestellt wird.
Für die Sicherung von Absperrelementen bei der Dichtheitsprüfung von Rohrleitungen sind Verbaugeräte oder Verschiebesicherungen mit Zusatzverstrebung bekannt.
Diese Sicherungen sind nur für eine Rohrdimension konstruiert und somit nicht für jede Dimension einsetzbar. Des Weiteren erfolgt nur eine einmalige Abstützung zwischen Rohrverschluss und Rohrwandung.
So ist auch nach der gattungsbildenden EP 0 795 653 A2 eine Verschiebesicherung für Verbaugeräte an Rohrverschlüssen bekannt.
Diese Vorrichtung sichert nur eine Abstützung im Kanaleinsteigeschacht, so dass die Kraft nur einseitig beaufschlagt wird und eine optimale Abstützung nicht gewährleistet wird. Des Weiteren ist der vorhandene Anpressdruck auf Kanalsohle nur auf einem Punkt konzentriert, der zu einer Beschädigung des Bauwerks führt.
Auch erschwert diese aus mehreren Teilen bestehende Sicherungseinrichtung das Zusammenbauen der Einrichtung auf der Kanalsohle.

Aufgabe der Erfindung ist es, eine Einrichtung zur Sicherung und Rückhaltung von Absperrelementen bei der Rohrdichtheitsprüfung anzugeben, die bei einem vorgeschriebenen Prüfdruck und in jeder Rohrdimension ein genaues und festes Platzieren der Absperrelemente ermöglicht.

Erfindungsgemäß wird die Aufgabe dadurch gelöst, dass auf einer bekannten Grundstütze eine mit einem Adapter auf ein Stützgelenk versehene Gewindespindel und eine Zusatzsicherung angeordnet sind.
Das Stützgelenk ist durch ein Scharnier zusammenklappbar.
An einem dem Absperrelement zugewandten Ende der Grundstütze befindet sich eine Druckplatte mit einem Druckgelenk, um das Absperrelement bei der Dichtheitsprüfung abzustützen.
Zur Unfallvermeidung ist auf der Gewindespindel am oberen Ende ein Spindelkopf aus flexiblem Material befestigt.
Des Weiteren sind an einer Spreizhülse zwei zusammenklappbare Spreizstangen angeordnet, an deren äußeren Enden sich Spreizaufnahmen befinden. Die Spreizstangen sind durch eine Führungshülse gelenkig miteinander verbunden. Am Ende der Spreizstangen sind die Spreizaufnahmen durch die Spreizhülse mit der Oberkante des Rohres verspannt. Eine Zusatzsicherung ist zwischen der Grundstütze und der
Spreizaufnahme, die sich auf der dem Absperrelement gegenüberliegenden Wandung des Normschachtes befindet, angeordnet. Diese Zusatzsicherung ist in einem Zusatzdruckgelenk zur Rohrwand hin verspannt und mittels eines Drucklagers einklappbar.
Durch eine Höhenverstellung, die mit einer Kontermutter gesichert ist, erfolgt die Anpassung der Gewindespindel an verschiedene Rohrdurchmesser.

Der Vorteil der erfindungsgemäßen Einrichtung besteht darin, dass diese direkt vor Ort in den Prüfbereich eingebaut ist und somit bei einem vorgeschriebenen Prüfdruck sich das Absperrelement nicht von der Platzierung löst. Die Verspannung erfolgt ohne Hilfsmittel. Des Weiteren ist die Einrichtung universell für unterschiedliche Rohrdurchmesser einsetzbar.
Auch wird diese ohne zusätzlichem Werkzeug auf- und abgebaut. Die benötigten Zuleitungen, beispielweise Wasser oder Luft, für die Absperrelemente werden ohne Behinderung montiert und demontiert.
Durch die klappbare Grundstütze und Zusatzsicherung ist eine größtmögliche Standsicherheit bei minimaler Größe der erfindungsgemäßen Einrichtung gewährleistet.

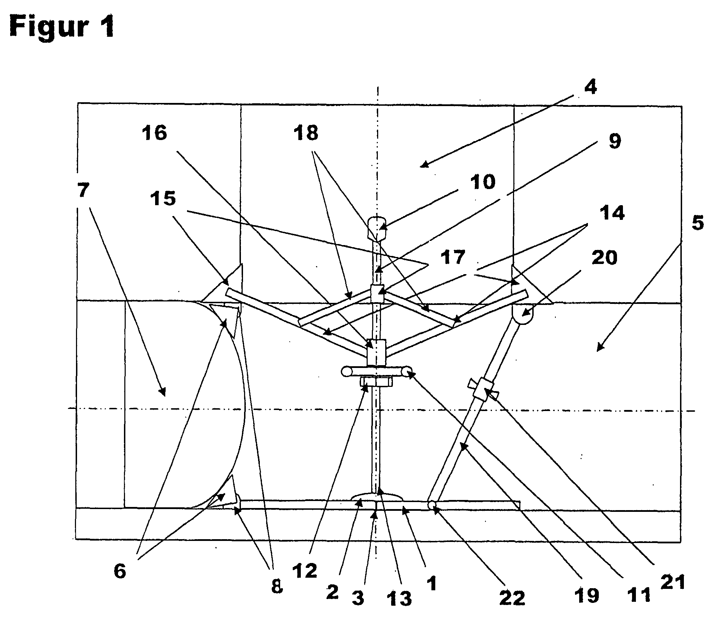

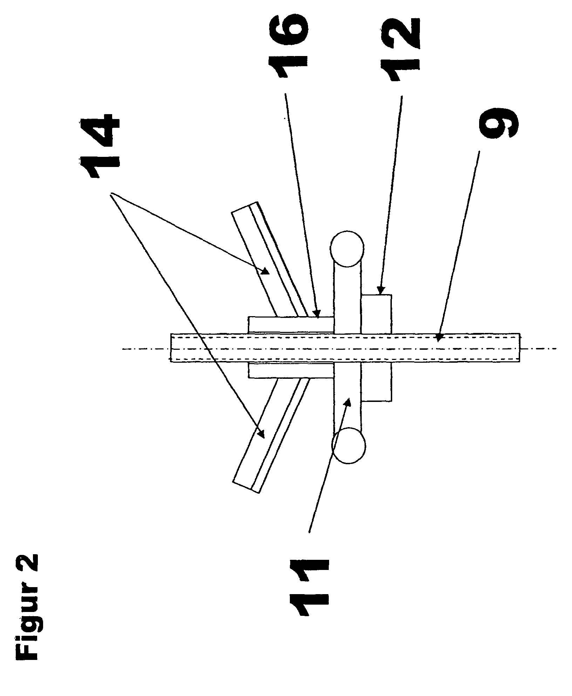

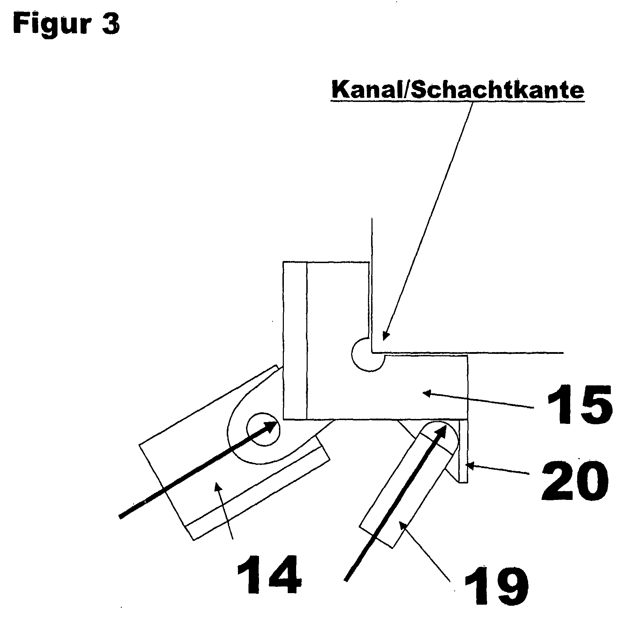

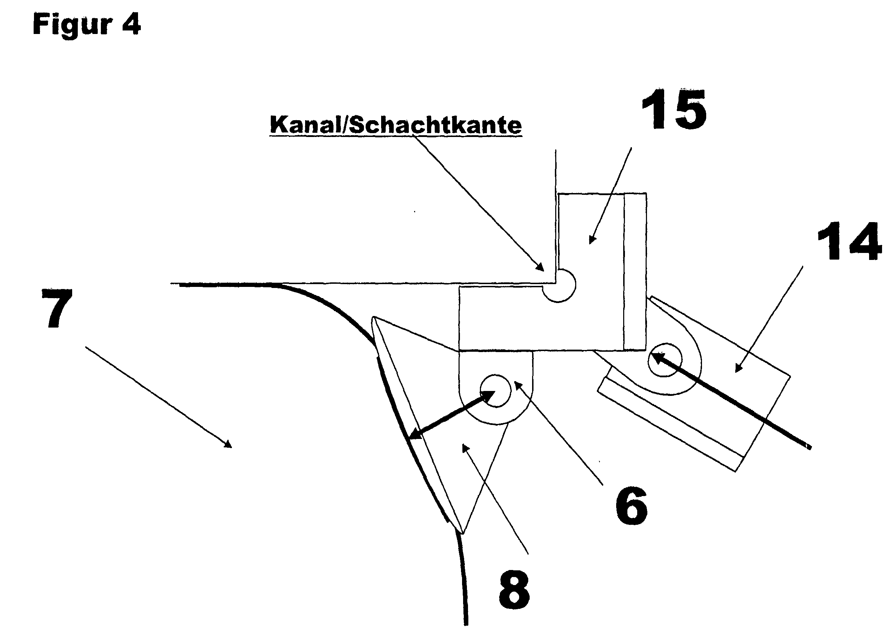

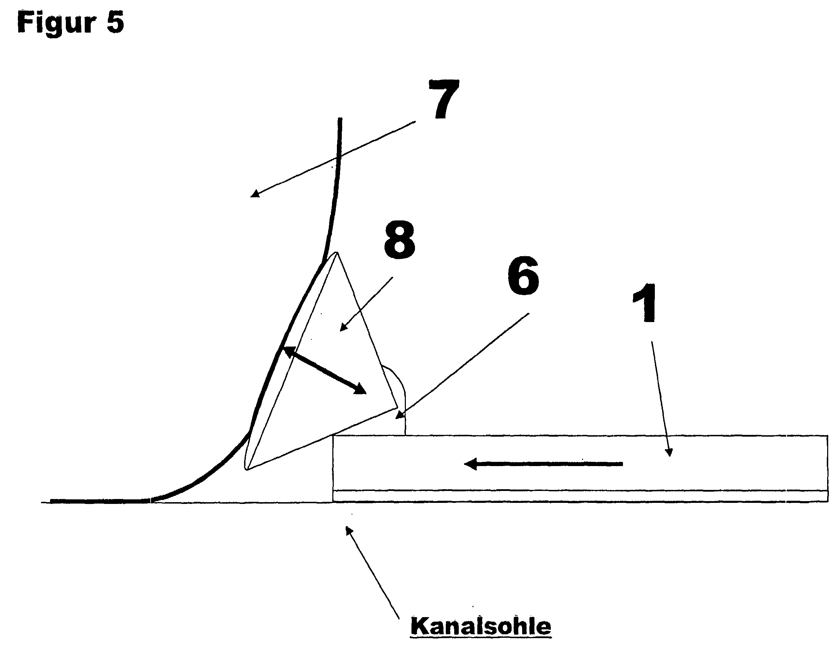

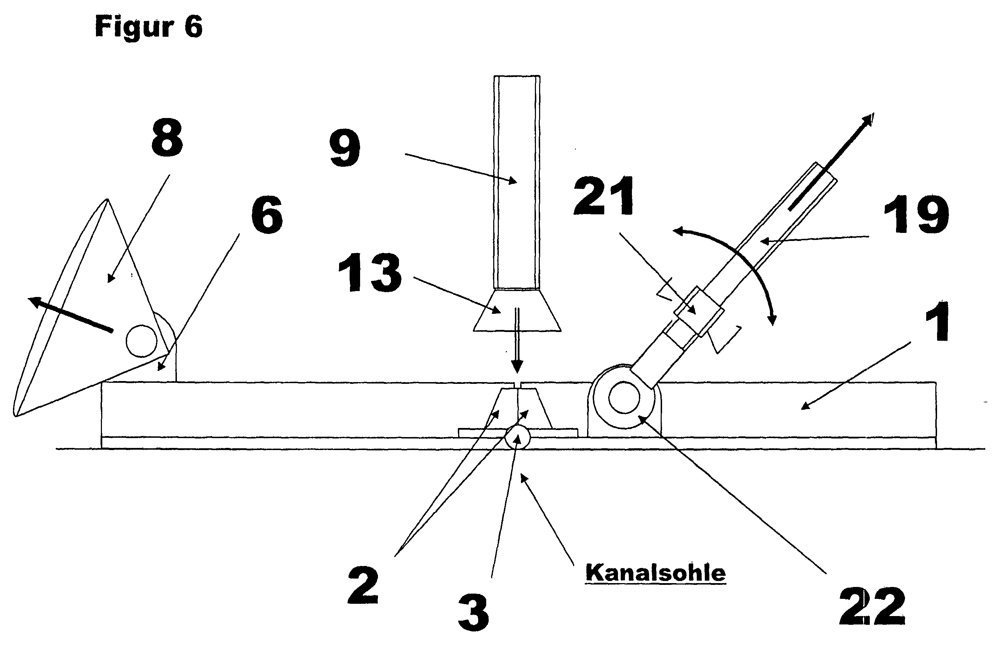

Die Erfindung soll nachstehend an einem Ausführungsbeispiel in Figur 1 bis Figur 6 näher erläutert werden.
- Figur 1: - zeigt die Einrichtung in eingebautem Zustand abgestützt an den Kanten eines Normeinsteigschachtes.
- Figur 2: - zeigt die Gewindespindel mit den Verstell- und Spreizelementen.
- Figur 3: - zeigt die Spreizaufnahme in der Einbaustellung an der Schachtkante mit Platzierung der Zusatzsicherung.
- Figur 4: - zeigt die Spreizaufnahme in der Einbaustellung an der Schachtkante mit der Druckplatte zur Abstützung des Dichtmittels.
- Figur 5: - zeigt die Grundstütze in der Einbaustellung mit der Druckplatte zur Abstützung des Dichtmittels.
- Figur 6: - zeigt die Grundstütze mit dem Stützgelenk vor Positionierung der Gewindespindel.

Die Grundstütze 1 ist mit dem Stützgelenk 2, das im Transportfall mittels eines Scharniers 3 zusammengeklappt ist, durch den Normschacht 4 auf der Sohle des Rohres aufgeklappt in Stellung gebracht, sodass mit der Druckplatte 6 das Absperrelement 7 berührt wird. Am linken Ende befindet sich ein Druckgelenk 8, dass das Absperrelement 7 mit der beweglichen Druckplatte 6 abstützt.
Die Gewindespindel 9 mit den montierten Einzelteilen, wird ebenfalls im zusammengeklappten Zustand in den Prüfbereich transportiert. Am oberen Ende der Gewindespindel 9 ist zur Unfallvermeidung ein Spindelkopf 10 aus flexiblem Material montiert. Die Höhenverstellung 11 und Kontermutter 12 werden bis auf den Adapter 13 hinuntergeschraubt. Die Gewindespindel 9 ist mit dem Adapter 13 auf das Stützgelenk 2 aufgesetzt.
Die zusammengeklappten Spreizstangen 14 sind aufgeklappt, sodass die Spreizaufnahmen 15 sich an der Oberkante des Rohres arettieren.
Die Höhenverstellung 11 wird so lange hochgedreht, bis diese mit Hilfe der Spreizhülse 16 die Spreizaufnahmen 15 am Ende der Spreizstangen 14 an der Oberkante des Rohres 5 verspannt sind. Dabei sind die Spreizstangen 14 durch eine Führungshülse 17 mit den Führungsstangen gelenkig verbunden und parallel geführt. Mit der Kontermutter 12 wird die Höhenverstellung 11 gegen das Verstellen gesichert.
Um eine höhere Sicherheit zu erhalten, ist eine Zusatzsicherung 19, mit einem Zusatzdruckgelenk 20 in den Spreizaufnahmen 15 mittels einer Verstellmutter 21 verspannt. Bei Nichteinsatz der Zusatzsicherung 19, ist diese in die Grundstütze 1 mittels eines Drucklagers 22 eingeklappt.
Nach diesem Einbau wird das Absperrelement 7 selbst mittels Luftdruck kraftschlüssig an die Wandung des Rohres 5 gepresst und mit der Dichtheitsprüfung begonnen. Bei der Prüfung mit Luft oder Wasser wird durch den formschlüssigen Einbau der erfindungsgemäßen Einrichtung, das Absperrelement 7 optimal gegen Verschieben oder Herausschießen gesichert.
Der Ausbau aus dem Rohr 5 erfolgt in umgekehrter Reihenfolge wie der Einbau.

### Aufstellung der verwendeten Bezugszeichen

- 1: Grundstütze
- 2: Stützgelenk
- 3: Scharnier
- 4: Normschacht
- 5: Rohr
- 6: Druckplatte
- 7: Absperrelement
- 8: Druckgelenk
- 9: Gewindespindel
- 10: Spindelkopf
- 11: Höhenverstellung
- 12: Kontermutter
- 13: Adapter
- 14: Spreizstangen
- 15: Spreizaufnahme
- 16: Spreizhülse
- 17: Führungshülse
- 18: Führungsstangen
- 19: Zusatzsicherung
- 20: Zusatzdruckgelenk
- 21: Verstellmutter
- 22: Drucklager

## Patentansprüche

1. Einrichtung zur Sicherung von Absperrelementen bei der Dichtheitsprüfung von erd- und freiverlegten Rohrleitungen, wobei auf einer Grundstütze (1) eine mit einem Adapter (13) auf ein Stützgelenk (2) versehene Gewindespindel (9), an der am oberen Ende ein Spindelkopf (10) befestigt ist, und eine Zusatzsicherung (19) angeordnet ist, **dadurch gekennzeichnet, dass** an einem dem Absperrelement (7) zugewandten Ende der Grundstütze (1) eine Druckplatte (6) mit einem Druckgelenk (8) vorhanden ist, auf der Gewindespindel (9) zwei an einer Spreizhülse zusammenklappbare Spreizstangen (14), an deren äusseren Enden sich Spreizaufnahmen (15) befinden, befestigt sind und die Zusatzsicherung (19) zwischen der Grundstütze (1) und Spreizaufnahme (15), die sich auf der dem Absperrelement (7) gegenüberliegenden Wandung des Normschachtes (4) befindet, angeordnet ist.

2. Einrichtung nach dem Anspruch 1,
**dadurch gekennzeichnet, dass**
die Spreizstangen (14) durch Führungshülsen (17) gelenkig miteinander verbunden sind.

3. Einrichtung nach den Ansprüchen 1 und 2,
**dadurch gekennzeichnet, dass**
die Zusatzsicherung (19) in einem Zusatzdruckgelenk (20) verspannt ist.

4. Einrichtung nach den Ansprüchen 1 bis 3,
**dadurch gekennzeichnet, dass**
an der Gewindespindel (9) eine Höhenverstellung (11) mit einer Kontermutter (12) angeordnet ist.

## Claims

1. Equipment for securing plugging elements in leakage checking of underground and exposed pipe ducts, wherein a threaded spindle (9), which is provided with an adaptor (13) on a support joint (2), is fastened on a base support (1), at which a spindle head (40) is fastened at the upper end, and an auxiliary securing means (19) is arranged, **characterised in that** a pressure plate (6) with a pressure joint (8) is present at an end of the base support (1) facing the plugging element (7), on which threaded spindle (9) are fastened two spreader rods (14) which are collapsible at a spreader sleeve and at the outer ends of which are disposed spreader seats (15), and the auxiliary securing means (19) is arranged between the base support (1) and spreader seat (15), which is on the wall of the standard shaft (4) opposite the plugging element (7).

2. Equipment according to claim 1, **characterised in that** the spreader rods (14) are pivotably connected together by the guide sleeves (17).

3. Equipment according to claims 1 and 2, **characterised in that** the auxiliary securing means (19) is clamped in an auxiliary pressure joint (20).

4. Equipment according to claims 1 to 3, **characterised in that** a height adjusting means (11) with a lock nut (12) is arranged at the threaded spindle (9).

## Revendications

1. Installation pour fixer des éléments de fermeture pour contrôler l'étanchéité de conduites enfouies ou installées à l'extérieur, comprenant sur un appui de base (1), une broche filetée (9) munie d'un adaptateur (13) sur une articulation d'appui (2) et une tête de broche (10) fixée à l'extrémité supérieure de cette broche ainsi qu'une fixation complémentaire (19),
**caractérisée en ce qu'**
une extrémité de l'appui de base (1), tournée vers l'élément de fermeture (7), porte une plaque de poussée (6) munie d'une articulation de poussée (8) et la broche filetée (9) porte deux biellettes d'écartement (14), repliable sur un manchon d'écartement et dont les extrémités extérieures sont munies de logements d'écartement (15), la fixation complémentaire (19) étant prévue entre l'appui de base (1) et les logements d'écartement (15), sur la paroi du puits normalisé, en regard de l'élément de fermeture (7).

2. Installation selon la revendication 1,
**caractérisée en ce que**
les tiges d'écartement (14) sont reliées entre elles de manière articulée par des manchons de guidage (17).

3. Installation selon les revendications 1 et 2,
**caractérisée en ce que**
la fixation supplémentaire (19) est serrée au niveau d'une articulation de poussée complémentaire (20).

4. Installation selon les revendications 1 à 3,
**caractérisée par**
un moyen de réglage en hauteur (11) avec un contre-écrou (12) sur la broche filetée (9).
